# FASCICULE DE BREVET EUROPEEN

(11) **EP 3 276 134 B1**
(45) Date de publication et mention de la délivrance du brevet: **13.03.2019**
(21) Numéro de dépôt: 17183789.1
(22) Date de dépôt: 28.07.2017
(51) Int. Cl.: F01N 3/023, F01N 3/027, F01N 5/02

(54) **DISPOSITIF DE RÉGÉNÉRATION D'UN FILTRE À PARTICULES ET ENSEMBLE ASSOCIÉ**
VORRICHTUNG ZUR REGENERIERUNG EINES PARTIKELFILTERS, UND ENTSPRECHENDE ANORDNUNG
DEVICE FOR REGENERATING A PARTICLE FILTER AND ASSOCIATED ASSEMBLY

(30) Priorité: 29.07.2016 FR 1657380
(43) Date de publication de la demande: 31.01.2018
(73) Titulaire: Valeo Systemes Thermiques, 78320 Le Mesnil Saint Denis (FR)
(72) Inventeur: AZZOUZ, Kamel, 78322 LE MESNIL SAINT DENIS CEDEX (FR); DE VAULX, Cédric, 78322 LE MESNIL SAINT DENIS CEDEX (FR); SIMONIN, Michel, 78960 VOISINS LE BRETONNEUX (FR)
(74) Mandataire: Tran, Chi-Hai

(56) Documents cités:
- DE-A1-102011 050 443
- FR-A1- 2 806 125

## Description

Dans le domaine automobile, il a déjà été proposé des dispositifs thermoélectriques utilisant des éléments, dits thermoélectriques, permettant de générer un courant électrique en présence d'un gradient de température entre deux de leurs faces opposées selon le phénomène connu sous le nom d'effet Seebeck. Ces dispositifs sont aussi appelés générateurs thermoélectriques.

Il est connu par exemple du document DE102011050443, de positionner ces générateurs thermoélectriques dans une ligne d'échappement de véhicule automobile, voire dans le circuit de gaz d'échappement recirculés pour les véhicules automobiles présentant un tel circuit entre l'échappement et l'admission du moteur thermique. L'objectif est l'utilisation de la chaleur des gaz d'échappement des véhicules automobile pour générer de l'énergie électrique.

D'autre part, le traitement des gaz d'échappement est nécessaire, notamment pour éviter que ne soient largués des gaz toxiques à l'air libre. Ce traitement des gaz est une fonction distincte de celle de la génération d'énergie électrique par les générateurs évoqués ci-dessus. Elle est communément assurée par un filtre à particules, comme connu du document FR2806125.

Un des buts de la présente invention consiste à proposer une solution permettant d'assurer une régénération d'un tel filtre à particules.

Ainsi, l'invention concerne un dispositif de régénération d'un filtre à particules, comprenant un générateur thermoélectrique, un condensateur et un élément résistif, ledit générateur étant susceptible de générer un courant électrique sous l'action d'un gradient de température au contact d'une source froide d'une part, et d'une source chaude d'autre part.

Selon l'invention, une partie du courant électrique ainsi généré est destinée à assurer la charge du condensateur, ledit condensateur étant conçu pour se décharger à travers l'élément résistif de manière à élever la température d'un premier fluide, en amont du filtre à particules, de sorte à entrainer la pyrolyse d'au moins une partie des particules retenues dans ledit filtre, ledit premier fluide constituant la source chaude du générateur thermoélectrique.

Le dispositif de l'invention comprend un élément résistif qui est alimenté par un courant électrique généré localement, par un générateur thermoélectrique. Cet élément résistif, qui comprend une pluralités de résistances chauffante, commandées individuellement par une unité de commande électronique, initie la pyrolyse de particules non désirables retenues par un filtre à particules, entraînant ainsi la régénération dudit filtre à particules.

Le dispositif de l'invention propose donc une solution permettant d'assurer une régénération du filtre à particules. La solution proposée présente l'avantage de permettre cette régénération sans faire appel à une source d'énergie extérieure au dispositif de l'invention.

Selon différents modes de réalisation de l'invention, qui pourront être pris ensemble ou séparément :
- ledit élément résistif comprend au moins une résistance chauffante,
- ledit élément résistif comprend une pluralité de résistances chauffantes, commandées individuellement, de manière à assurer la pyrolyse des particules en différents points dudit filtre,
- lesdites résistances chauffantes sont activées séquentiellement, au cours d'un cycle, de manière à assurer la pyrolyse de la plupart des particules retenues dans le filtre,
- l'activation séquentielle desdites résistances est fonction du débit dudit premier fluide,
- le dispositif de régénération de l'invention est destiné à être positionné dans une ligne d'échappement de véhicule automobile de sorte que les gaz d'échappement circulant dans ladite ligne définissent ledit premier fluide et/ou dans un circuit de gaz d'échappement recirculés de véhicule automobile de sorte que lesdits gaz d'échappement recirculés circulant dans ledit circuit définissent ledit premier fluide,
- l'élément résistif est positionné, dans le sens de circulation des gaz, en amont du filtre à particules,
- le filtre à particules est positionné, dans le sens de circulation des gaz, en amont du générateur thermoélectrique.

L'invention concerne aussi, avantageusement, un ensemble comprenant un dispositif de régénération tel que décrit ci-dessus, ledit ensemble comprenant, en outre, un dispositif catalytique, ledit dispositif catalytique étant configuré pour assurer une conversion catalytique des composants toxiques dudit premier fluide.

L'invention concerne encore, avantageusement, un tel ensemble dans lequel le dispositif catalytique est monté en série avec le dispositif de régénération, ledit dispositif catalytique étant positionné, le long d'une ligne d'échappement, entre un moteur, configuré pour échapper lesdits gaz d'échappement, et ledit dispositif de régénération.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 est une représentation schématique d'une ligne d'échappement le long de laquelle est représenté un exemple de réalisation d'un dispositif de régénération d'un filtre à particules selon l'invention,
- la figure 2 est une vue de détail de la partie repérée A sur la figure 1.

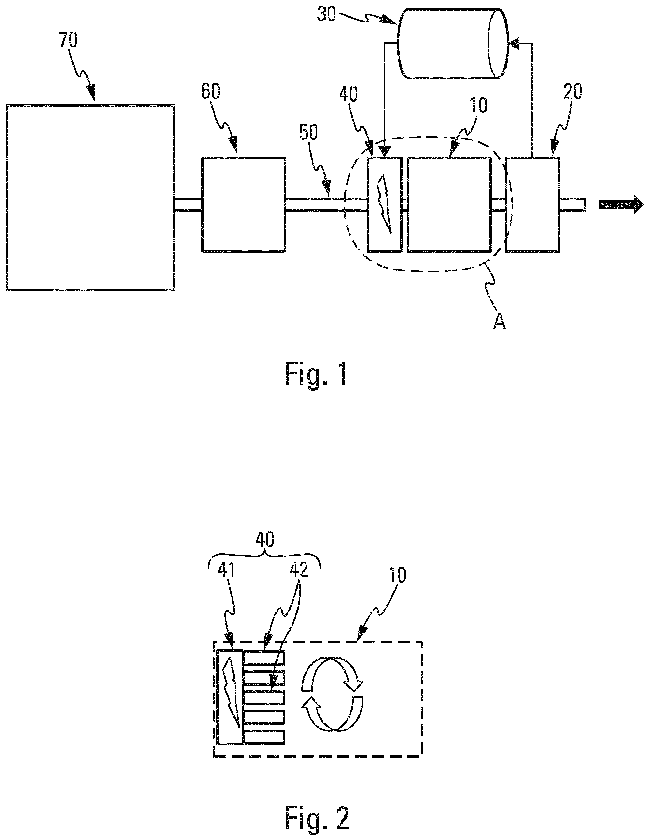

Comme illustré sur la figure 1, l'invention concerne un dispositif de régénération d'un filtre à particules 10, comprenant un générateur thermoélectrique 20, un condensateur 30 et un élément résistif 40.

Par « filtre à particules 10 », on entend un moyen destiné à filtrer un fluide de ses particules toxiques, par exemple en les retenant dans des pores d'un matériau poreux constituant ledit filtre.

Par « générateur thermoélectrique 20 », on entend un générateur susceptible de générer un courant électrique sous l'action d'un gradient de température au contact d'une source froide d'une part, et d'une source chaude d'autre part. Pour ce faire, ledit générateur 20 comprendra une pluralité d'éléments thermoélectriques (non détaillés ici) susceptibles de générer un courant électrique sous l'action d'un gradient de température exercé entre deux de leurs faces. Ces éléments thermoélectriques fonctionnent, selon l'effet Seebeck, en permettant de créer un courant électrique dans une charge connectée entre lesdites faces soumises au gradient de température. De façon connue de l'homme du métier, de tels éléments sont constitués, par exemple, de Bismuth et de Tellurium (Bi2Te3).

Par « condensateur 30 », on entend, de préférence, un condensateur de haute capacité, connu en langue anglaise sous le nom d' « Ultra Capacitor ». Le condensateur 30 de l'invention est conçu pour être chargé par une charge continue, de faible intensité, sur un temps relativement long, par exemple sur un temps de 10 minutes. Le même condensateur 30 est ensuite apte à restituer l'électricité qu'il contient sous la forme d'un pic d'électricité, de très haute intensité, sur un temps relativement court, par exemple sur un temps de quelques secondes, par exemple un temps compris entre 1 et 3 secondes.

On entend par « élément résistif 40 », un élément comprenant au moins une résistance chauffante, voire une pluralité de résistances chauffantes alimentées par le courant mis à disposition par le condensateur 30. Une énergie de l'ordre de 50 Joules, par exemple, peut être générée aux bornes dudit élément résistif 40, notamment lors de la restitution de l'électricité emmagasinée par le condensateur 30 qui se fait sur un temps très court (voir ci-dessus). Cela signifie que, de manière instantanée, ledit élément résistif 40 est apte à élever la température d'un fluide circulant à travers lui, notamment d'environ 200°C.

La figure 1 illustre schématiquement une ligne d'échappement de véhicule automobile et/ou un circuit de gaz d'échappement recirculés de véhicule automobile. Cette ligne, ou circuit, est repéré 50 sur la figure 1. Les gaz d'échappement dudit véhicule automobile sont utilisés, ici, comme source chaude par le générateur thermoélectrique 20. Ces gaz peuvent circuler à une température de l'ordre de 700°C, par exemple.

Selon l'invention, la charge du condensateur 30 est assurée par une partie du courant électrique produite par ledit générateur thermoélectrique 20.

Selon l'invention, encore, le condensateur 30 est conçu pour se décharger à travers l'élément résistif 40 de manière à élever la température d'un premier fluide, en amont du filtre à particules 10.

Le premier fluide correspond, ici, aux gaz d'échappement.

Cette élévation de température entraine la pyrolyse d'au moins une partie des particules retenues dans ledit filtre 10. Autrement dit, la pyrolyse des particules toxiques retenues dans le filtre 10 est initiée par une brusque augmentation de la température des gaz d'échappement, notamment à l'entrée dudit filtre à particule 10.

Il est intéressant de noter que le premier fluide constitue aussi la source chaude du générateur thermoélectrique 20.

Il est à noter que l'élément résistif 40 à l'origine de la pyrolyse dudit filtre à particules 10 comprendra, avantageusement, une pluralité de résistances chauffantes 42, commandées individuellement. Ainsi, il est possible de prévoir la pyrolyse des particules en différents points dudit filtre 10 (voir figure 2). Autrement dit, lesdites résistances chauffantes 42 sont activées séquentiellement, au cours d'un cycle, de manière à assurer la pyrolyse de la plupart des particules retenues dans le filtre 10.

Cette activation sera gérée par une unité de commande électronique 41.

Il est à noter que l'unité de commande électronique 41 gère l'activation séquentielle desdites résistances 42 en fonction du débit dudit premier fluide. En particulier, plus le débit des gaz d'échappement sera élevé, plus le filtre 10 sera encrassé, plus la nécessité de le régénérer sera grande. Le cycle de gestion des résistances chauffantes 42 sera donc prévu de manière à régénérer efficacement le filtre à particules 10 ; on parlera alors de régénération par morceaux du filtre à particules 10. Par exemple, le filtre à particules 10 pourra être régénéré au terme d'un cycle de trois tranches de 10/15 minutes chacune, chaque tranche correspondant au temps indicatif d'une charge/décharge du condensateur 30 selon l'invention. Dans le cadre de l'exemple ici détaillé, le filtre à particules 10 pourra alors être régénéré, dans son ensemble, au terme d'un cycle compris entre 30 et 45 minutes.

Il est à noter, aussi, l'utilisation de l'expression « dépollution » du filtre à particules 10 pour désigner sa « régénération ». Il est aussi connu de parler de « nettoyage » du filtre à particules 10.

Comme illustré ici, l'élément résistif 40 sera avantageusement positionné, dans le sens de circulation des gaz, en amont du filtre à particules 10. Le filtre à particules 10 sera aussi positionné, dans ce même sens de circulation des gaz, en amont du générateur thermoélectrique 20.

Dès lors, dans cette configuration, les gaz circulant à travers ledit générateur 20 ont été filtrés/dépollués en amont dudit générateur 20 ; ils ne viennent pas abîmer la structure dudit générateur 20. De plus, ces gaz n'ont pas à être retraités en aval dudit générateur 20 avant d'être largués hors de la ligne d'échappement 50.

Il est à noter que l'invention concerne aussi, avantageusement, un ensemble comprenant un dispositif de régénération tel que décrit ci-dessus, ledit ensemble comprenant, en outre, un dispositif catalytique 60. Ledit dispositif catalytique 60 est configuré pour assurer une conversion catalytique des composants toxiques dudit premier fluide, à savoir les gaz d'échappement. Le fonctionnement dudit dispositif catalytique 60 n'est pas détaillé ici car il ne fait pas l'objet de l'invention.

L'invention concerne encore, avantageusement, un tel ensemble dans lequel le dispositif catalytique 60 est monté en série avec le dispositif de régénération, ledit dispositif catalytique 60 étant positionné, le long de ladite ligne d'échappement 50, entre un moteur 70 de véhicule automobile et ledit dispositif de régénération (voir figure 1). Les gaz d'échappement en question ici proviennent dudit moteur 70.

Un avantage du dispositif de régénération selon l'invention, et de l'ensemble associé, consiste en une diminution de la consommation d'essence dudit véhicule automobile, notamment car il n'y a pas nécessité d'injection d'essence supplémentaire pour assurer la régénération dudit filtre à particules 10.

D'autre part, il est à noter que le contrôle d'émission de particules toxiques est ici particulièrement efficace, car assuré par le dispositif catalytique 60 d'une part, et, par le filtre à particules 10 d'autre part. Autrement dit, l'invention permet d'améliorer le traitement des gaz d'échappement, en particulier à l'aide de l'énergie électrique qui est produite par le générateur thermoélectrique 20 à partir de ces mêmes gaz d'échappement.

## Revendications

1. Dispositif de régénération d'un filtre à particules (10), comprenant un générateur thermoélectrique (20), un condensateur (30) et un élément résistif (40), ledit générateur (20) étant susceptible de générer un courant électrique sous l'action d'un gradient de température au contact d'une source froide d'une part, et d'une source chaude d'autre part, une partie du courant électrique ainsi généré étant destinée à assurer la charge du condensateur (30), ledit condensateur (30) étant conçu pour se décharger à travers l'élément résistif (40) de manière à élever la température d'un premier fluide, en amont du filtre à particules (10), de sorte à entrainer la pyrolyse d'au moins une partie des particules retenues dans ledit filtre (10), ledit premier fluide constituant la source chaude du générateur thermoélectrique (20),
et dans lequel ledit élément résistif (40) comprend une pluralité de résistances chauffantes (42), commandées individuellement par une unité de commande (41), de manière à assurer la pyrolyse des particules en différents points dudit filtre (10).

2. Dispositif de régénération selon la revendication précédente, dans lequel ledit élément résistif (40) comprend au moins une résistance chauffante (42).

3. Dispositif de régénération selon l'une des revendications précédentes, dans lequel lesdites résistances chauffantes (42) sont activées séquentiellement, au cours d'un cycle, de manière à assurer la pyrolyse de la plupart des particules retenues dans le filtre (40).

4. Dispositif de régénération selon la revendication précédente, dans lequel l'activation séquentielle desdites résistances (42) est fonction du débit dudit premier fluide.

5. Dispositif de régénération selon l'une quelconque des revendications précédentes, destiné à être positionné dans une ligne d'échappement (50) de véhicule automobile de sorte que les gaz d'échappement circulant dans ladite ligne (50) définissent ledit premier fluide et/ou dans un circuit de gaz d'échappement (50) recirculés de véhicule automobile de sorte que lesdits gaz d'échappement recirculés circulant dans ledit circuit (50) définissent ledit premier fluide.

6. Dispositif de régénération selon la revendication précédente, dans lequel l'élément résistif (40) est positionné, dans le sens de circulation des gaz, en amont du filtre à particules (10).

7. Dispositif de régénération selon l'une quelconque des revendications 5 ou 6, dans lequel le filtre à particules (10) est positionné, dans le sens de circulation des gaz, en amont du générateur thermoélectrique (20).

8. Ensemble comprenant un dispositif de régénération selon l'une quelconque des revendications précédentes, ledit ensemble comprenant, en outre, un dispositif catalytique (60), ledit dispositif catalytique (60) étant configuré pour assurer une conversion catalytique des composants toxiques dudit premier fluide.

9. Ensemble selon la revendication précédente, dans lequel le dispositif catalytique (60) est monté en série avec le dispositif de régénération, ledit dispositif catalytique (60) étant positionné, le long d'une ligne d'échappement (50), entre un moteur (70), configuré pour échapper lesdits gaz d'échappement, et ledit dispositif de régénération.

## Patentansprüche

1. Vorrichtung zur Regenerierung eines Partikelfilters (10), umfassend einen thermoelektrischen Generator (20), einen Kondensator (30) und ein Widerstandselement (40), wobei der Generator (20) geeignet ist, unter der Einwirkung eines Temperaturgradienten in Kontakt mit einer kalten Quelle einerseits und einer heißen Quelle andererseits einen elektrischen Strom zu erzeugen, wobei ein Teil des so erzeugten elektrischen Stroms dazu bestimmt ist, das Laden des Kondensators (30) zu gewährleisten, wobei der Kondensator (30) ausgelegt ist, um durch das Widerstandselement (40) derart entladen zu werden, um die Temperatur eines ersten Fluids vorgelagert vor dem Partikelfilter (10) derart zu erhöhen, um die Pyrolyse von mindestens einem Teil der in dem Filter (10) zurückgehaltenen Teilchen herbeizuführen, wobei das erste Fluid die heiße Quelle des thermoelektrischen Generators (20) bildet,
und wobei das Widerstandselement (40) mehrere Heizwiderstände (42) aufweist, die einzeln durch eine Steuereinheit (41) derart gesteuert werden, um die Pyrolyse der Partikel an verschiedenen Stellen des Filters (10) zu gewährleisten.

2. Vorrichtung zur Regenerierung nach dem vorhergehenden Anspruch, wobei das Widerstandselement (40) mindestens einen Heizwiderstand (42) aufweist.

3. Vorrichtung zur Regenerierung nach einem der vorhergehenden Ansprüche, wobei die Heizwiderstände (42) während eines Zyklus sequentiell derart aktiviert werden, um die Pyrolyse der meisten in dem Filter (40) zurückgehaltenen Teilchen zu gewährleisten.

4. Vorrichtung zur Regenerierung nach dem vorhergehenden Anspruch, wobei das sequentielle Aktivieren der Widerstände (42) von dem ersten Fluid abhängig ist.

5. Vorrichtung zur Regenerierung nach einem der vorhergehenden Ansprüche, die dazu bestimmt ist, in einer Kraftfahrzeugauspuffleitung (50) derart angeordnet zu werden, dass die Abgase, die in der Leitung (50) zirkulieren, das erste Fluid definieren und/oder in einem Kreislauf von rückgeführten Kraftfahrzeugabgasen (50) derart angeordnet zu werden, dass die rückgeführten Abgase, die in dem Kreislauf (50) zirkulieren, das erste Fluid definieren.

6. Vorrichtung zur Regenerierung nach dem vorhergehenden Anspruch, wobei das Widerstandselement (40) in der Zirkulationsrichtung der Gase vorgelagert vor dem Partikelfilter (10) angeordnet ist.

7. Vorrichtung zur Regenerierung nach einem der Ansprüche 5 oder 6, wobei der Partikelfilter (10) in der Zirkulationsrichtung der Gase vorgelagert vor dem thermoelektrischen Generator (20) angeordnet ist.

8. Anordnung, umfassend eine Vorrichtung zur Regenerierung nach einem der vorhergehenden Ansprüche, wobei die Anordnung ferner eine katalytische Vorrichtung (60) aufweist, wobei die katalytische Vorrichtung (60) konfiguriert ist, um eine katalytische Umwandlung der toxischen Bestandteile des ersten Fluids zu gewährleisten.

9. Anordnung nach dem vorhergehenden Anspruch, wobei die katalytische Vorrichtung (60) mit der Vorrichtung zur Regenerierung in Reihe geschaltet ist, wobei die katalytische Vorrichtung (60) entlang einer Auspuffleitung (50) zwischen einem Motor (70), der konfiguriert ist, um die Abgase auszulassen, und der Vorrichtung zur Regenerierung positioniert ist.

## Claims

1. Device for regenerating a particle filter (10), comprising a thermoelectric generator (20), a capacitor (30) and a resistive element (40), said generator (20) being capable of generating an electric current under the action of a temperature gradient in contact with a cold source on the one hand and with a hot source on the other hand, a portion of the electric current thus generated being intended to ensure the charging of the capacitor (30), said capacitor (30) being designed to discharge through the resistive element (40) so as to raise the temperature of a first fluid, upstream of the particle filter (10), so as to bring about the pyrolysis of at least one portion of the particles retained in said filter (10), said first fluid constituting the hot source of the thermoelectric generator (20),
and in which said resistive element (40) comprises a plurality of heating resistors (42), individually controlled by a control unit (41), so as to ensure the pyrolysis of the particles at various points of said filter (10).

2. Regeneration device according to the preceding claim, in which said resistive element (40) comprises at least one heating resistor (42).

3. Regeneration device according to one of the preceding claims, in which said heating resistors (42) are activated sequentially, during a cycle, so as to ensure the pyrolysis of most of the particles retained in the filter (40).

4. Regeneration device according to the preceding claim, in which the sequential activation of said resistors (42) is dependent on the flow rate of said first fluid.

5. Regeneration device according to any one of the preceding claims, intended to be positioned in an exhaust line (50) of a motor vehicle so that the exhaust gases flowing through said line (50) define said first fluid and/or in a recirculated exhaust gases circuit (50) of a motor vehicle so that said recirculated exhaust gases flowing through said circuit (50) define said first fluid.

6. Regeneration device according to the preceding claim, in which the resistive element (40) is positioned, in the flow direction of the gases, upstream of the particle filter (10).

7. Regeneration device according to either one of Claims 5 and 6, in which the particle filter (10) is positioned, in the flow direction of the gases, upstream of the thermoelectric generator (20).

8. Assembly comprising a regeneration device according to any one of the preceding claims, said assembly comprising, in addition, a catalytic device (60), said catalytic device (60) being configured in order to ensure a catalytic conversion of the toxic components of said first fluid.

9. Assembly according to the preceding claim, wherein the catalytic device (60) is mounted in series with the regeneration device, said catalytic device (60) being positioned, along an exhaust line (50), between an engine (70), configured in order to exhaust said exhaust gases, and said regeneration device.
